# EUROPEAN PATENT SPECIFICATION

(11) **EP 3 184 181 B1**
(45) Date of publication and mention of the grant of the patent: **23.06.2021**
(21) Application number: 15202537.5
(22) Date of filing: 23.12.2015
(51) Int. Cl.: B08B 9/44, B65G 47/90

(54) **WASHING UNIT LOADING**
LADEN EINER WASCHEINHEIT
CHARGEMENT D'UNE UNITÉ DE LAVAGE

(43) Date of publication of application: 28.06.2017
(73) Proprietor: Sidel End of Line & Tunnels Solutions Srl, 43126 Parma (IT)
(72) Inventor: SOLFA, Andrea, 37139 VERONA (IT); STERZI, Andrea, 37139 VERONA (IT); FIORIO, Luca, 37139 VERONA (IT); ACERBIS, Davide, 43126 PARMA (IT); ROCCA, Giorgio, 43126 PARMA (IT)
(74) Representative: Sidel Group

(56) References cited:
- DE-A1- 4 445 108
- DE-U1-202013 105 022
- GB-A- 819 745
- US-A- 4 199 049

## Description

The current invention belongs to the domain of industrial washing machines for empty beverage containers. Such washing machines treat rows of containers, at the level of an endless conveyor moving through different treatment zones. The object of the present invention is a specific washing unit as well as a corresponding method.

In this domain, a washing machine comprises a tunnel, with an infeed end and an outfeed end, as well as a conveying means which moves containers from said infeed to said outfeed for them to be treated. The conveying means has pockets, each dedicated to one container, said pockets being organized with a certain layout, in terms of relative position along the width of said conveying means or tunnel. Containers are inserted in said tunnel at the infeed end and extracted at the outfeed end. The containers are usually cylindrical, plastic or glass based.

Upstream to said tunnel, the containers arrive in crates, said crates being moved by a movable conveyor on which they stand. A robot then grasps the containers and extracts them from the crates. Tools for grasping containers are for example disclosed in US2897988, US5487257, EP756994, or EP1841571.

Containers are then released by the robot on a conveyor belt, for example as disclosed in US2862634, or GB739486. This conveyor belt further brings the containers at the infeed end of the tunnel.

The width of the container flow, as loaded in the tunnel, is wider than the container flow as released upstream, on the conveyor belt, right after the crates. An accumulation zone is therefore usually provided between, on the one side, the release zone of the robot, and, on the other side, the infeed zone of the tunnel. The cyclic arrival of containers as released by the robot is then transformed as a continuous loading of containers in the tunnel. Also, the mass flow is split in many one container wide columns. This transition from a cyclic input flow to a wide continuous mass flow of the size of the tunnel is usually obtained by changing the direction of the movement of containers. This leads to layouts as exemplified in FR2476614, DE1296039, US5038917, or also EP1700643.

Once the conveyor has brought the containers at the infeed zone of the tunnel, they are further brought in corresponding pockets of the tunnel conveying means. A dedicated transfer means, rotating like in US5038917 or sliding like in DE1296039, acts at the bottom of the containers, to lift them and orient them in line with the receiving pockets.

GB819745 discloses the preamble of claims 1 and 7.

There is a current need to improve this working principle of loading containers into a tunnel conveying means. In fact, jams can occur by expanding the container flow and further splitting it in separate lanes which repeat the pockets layout. An operator is therefore needed to handle these situations. Also, the need of a conveyor and an accumulation zone between the robot release area and the infeed area leads to layouts with a high footprint.

Therefore, the invention aims at proposing a washing unit improving the state of the art in terms of reliability, flexibility when it comes to changing the format of the containers treated, footprint, and/or human resources needed to operate and monitor said unit.

In order to reach this, the invention proposes that the robotic means directly releases the containers at the infeed zone, with a layout corresponding to the one of the tunnel conveying means.

According to the invention, there is provided a washing unit for washing empty containers, comprising a washing tunnel and an endless conveying means for moving said containers in said tunnel along a conveying direction, said conveying means having a set of receiving pockets, arranged as a plurality of tunnel rows of N receiving pockets with a tunnel pitch, each row extending along a transverse direction perpendicular to the conveying direction, the containers being received in the pockets at the level of an infeed zone of the tunnel.

This device is characterized in that it comprises a receiver, located at the infeed zone, having at least one receiver row, parallel to the transverse direction, of N separated portions for receiving containers and organizing them with the tunnel pitch, a robotic means, for loading the N portions of the receiver with containers, said robotic means grasping containers in the box or crate in which they stand initially, and treating simultaneously a batch of said containers, taking them out and loading them in the receiver and a transfer means, for acting on the containers to transfer them from said portions to the conveying means.

There is also provided a corresponding method, which means a method for loading containers in pockets of a conveying means which moves containers in a washing tunnel of a washing unit, at an infeed zone thereof, said pockets being arranged as parallel tunnel rows of N receiving pockets with a tunnel pitch, said tunnel rows extending perpendicular to the conveying direction of the conveying means, said method comprising grasping a batch of containers at their top end with a robotic means, and transferring containers from a receiver, located at the infeed zone and having N portions perpendicularly to the conveying direction, to at least one tunnel row of the conveying means.

This method is characterized in that the method comprises grasping, with a robotic means, at their top end, a batch of containers in the box or crate in which they stand initially the robotic means releases the containers in the portions of the receiver, the containers being moved so as to repeat the layout of the conveying means prior to be transferred to it.

Further features and advantages of the present invention will be better understood from the description of preferred embodiments, which is given below by way of a non-limiting illustration, with reference to the accompanying drawings, in which:

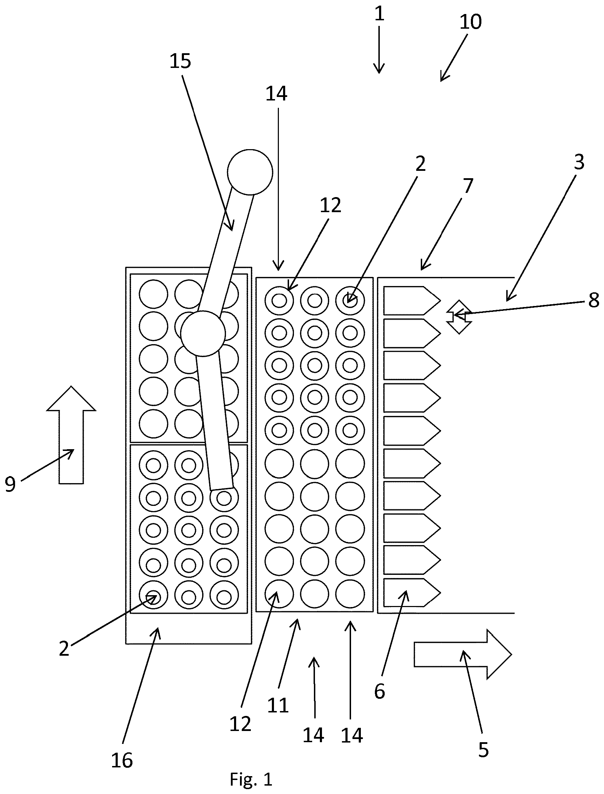

- figure 1 is a top view showing the loading of the receiver;

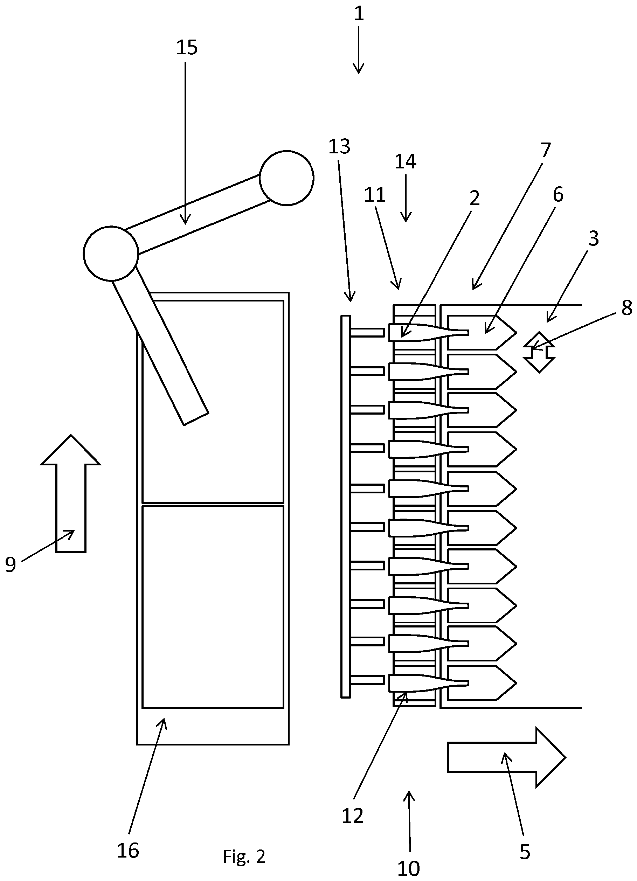

- figure 2 is a top view of the transfer to the conveying means;

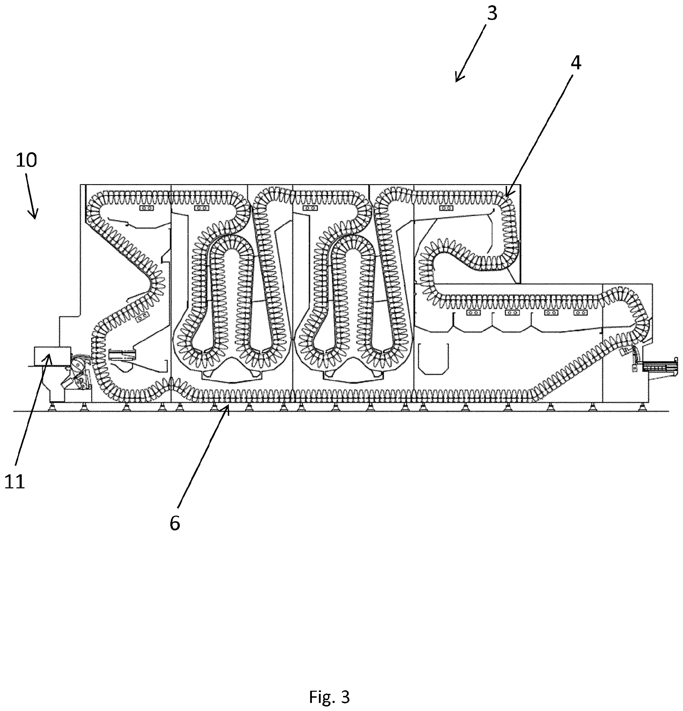

- figure 3 is a side view showing the tunnel;

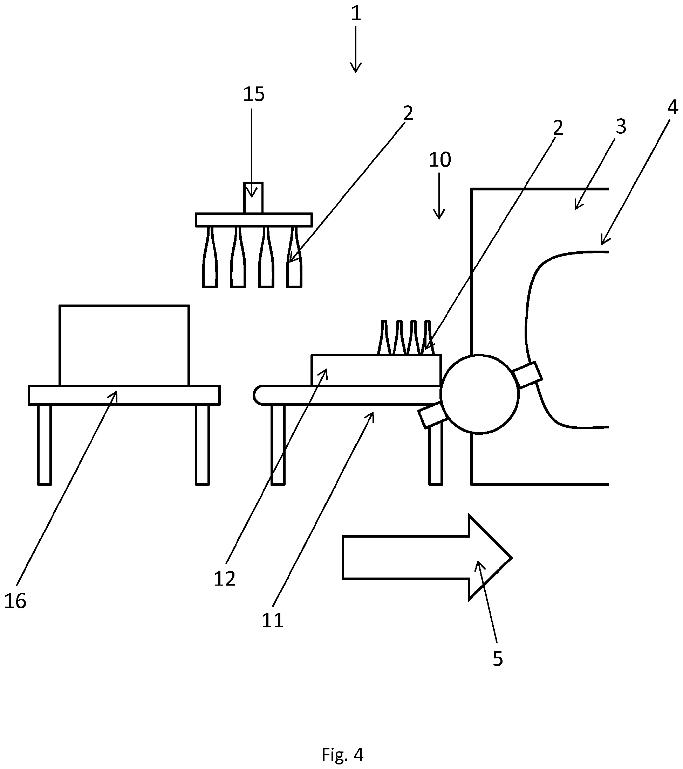

- figure 4 is a side view of a specific embodiment;

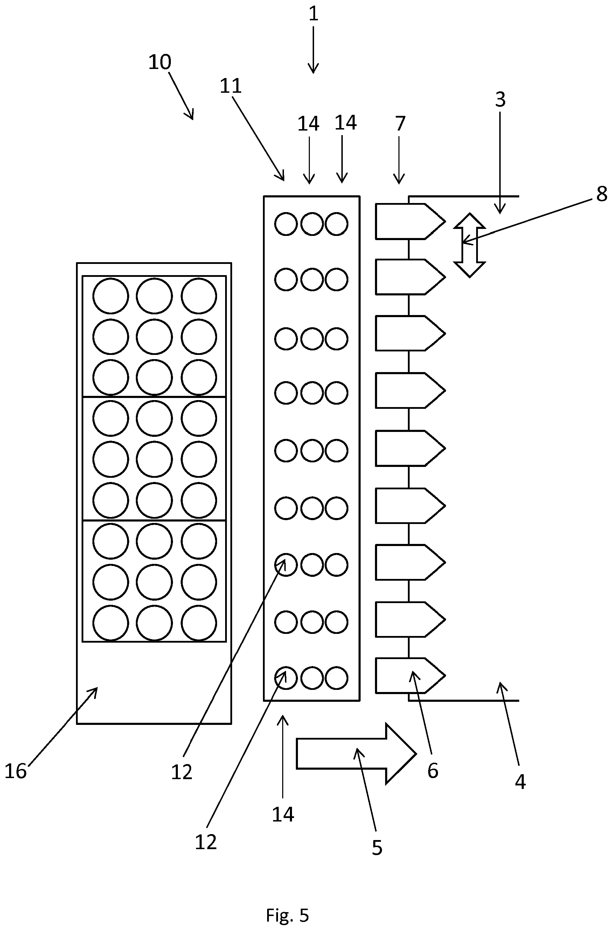

- figure 5 is a top view showing a reorganization of the containers along both longitudinal and transverse directions.

A first object of the present invention is a washing unit 1 for washing empty containers 2, comprising a washing tunnel 3 and an endless conveying means 4 for moving said containers 2 in said tunnel 3 along a conveying direction 5, said conveying means 4 having a set of receiving pockets 6, arranged as a plurality of tunnel rows 7 of N receiving pockets 6 with a tunnel pitch 8, each row 7 extending along a transverse direction 9 perpendicular to the conveying direction 5, the containers 2 being received in the pockets 6 at the level of an infeed zone 10 of the tunnel 3. The transverse direction 9 corresponds to the width of the tunnel 3.

Inside the tunnel 3, the containers 2 are conveyed upside down by the conveying means 4. The conveying means 4 comprises separate pockets 6, each pocket 6 being dedicated and sized to receive only one container 2. The pockets 6 are arranged with a certain layout in the conveying means 4: pockets 6 are next to each other in a tunnel row 7, along the transverse direction 9. Pockets 6 are arranged in this transverse direction 9, with a certain tunnel pitch 8. This tunnel pitch 8 corresponds to the distance, along the transverse direction 9, between one predefined point in one pocket 6 and the same point in the next pocket 6. The tunnel rows 7 are next to each other in the conveying direction 5. Here again, the pockets 6 layout has a certain longitudinal pitch, corresponding to the distance, along the conveying direction 5, between one predefined point in one pocket 6 and the same point in the next pocket 6.

The conveying means 4 can be seen as a matrix of pockets 6, in both the conveying direction 5 and the transverse direction 9, said matrix being connected in a closed loop.

According to the invention, the washing unit 1 comprises a receiver 11, located at the infeed zone 10, having at least one receiver row 14, parallel to the transverse direction 9, of N separated portions 12 for receiving containers 2 and organizing them with the tunnel pitch 8, a robotic means 15, for loading the N portions 12 of the receiver 11 with containers 2, and a transfer means 13, for acting on the containers 2 to transfer them from said portions 12 to the conveying means 4.

The robotic means 15 graps containers 2 from crates. At this stage, the containers 2 are organized in the crate with a certain matrix layout, defined by the crate itself. In the present invention, the containers 2 are released by the robotic means 15 in a receiver 11, located directly at the infeed zone 10, and in which containers 2 are separated along the transverse direction 9. In the transverse direction 9, the receiver 11 has partitions for separating each container 2. It is therefore possible to reproduce, in the receiver 11, the pockets 6 layout of the conveying means 4, at least in terms of tunnel pitch 8, along the transverse direction 9, or even also in terms of longitudinal pitch.

The robotic means 15 works for directly releasing the containers 2 with a quantity, in the transverse direction 9, corresponding to the number of pockets 6 of the conveying means 4. As will be explained later on, the robotic means 15 can also release more than one row of containers 2, said row being in the transverse direction 9. Filing the receiver 11 with at least on receiver row 14 corresponding to one tunnel row 7 can be done in more than one action of the robotic means 15. However, containers 2 are preferably transferred from the receiver 11 to the conveying means 4 in complete rows in the transverse direction 9. This means that the containers 2 of the receiver 11 are transferred to the conveying means 4 once the at least one receiver row 14 to transfer is completely full.

Hence, there is a sequence of, first, using the robotic means 15 to transfer containers 2 from the crates to the receiver 11 with the same number of containers 2 than the conveying means 4 in the transverse direction 9, and, second, transferring the containers 2 from the receiver 11 to the conveying means 4. Prior to the second transfer, the containers 2 are repositioned for repeating the layout of the conveying means 4, at least in terms of tunnel pitch 8 in the transverse direction 9. From a general standpoint, the containers 2 layout is shifted from the crate layout to the layout of the conveying means 4.

As the robotic means 15 releases the containers 2 directly in the infeed zone 10, and also as it releases them separated one by one along the transverse direction 9, there is no need to use an additional advancing means, which would move the containers 2 from the release area of the robotic means 15 and organize this separation while advancing.

According to another additional possible feature, the receiver 11 can be pivoted along an axis parallel to the transverse direction 9 from a mainly horizontal position, in which it can receive containers 2 from the robotic means 4, which grasped them at their top end, to a mainly vertical position, in which it can deliver the containers 2 to the conveying means 4. The receiver 11 forms a basket of at least one receiver row 14. It is pivoted for finally facing the conveying means 4. The receiver 11 arrives close enough to the conveying means 4 for simply inserting containers 2 from the portions 12 to the conveying means 4 with no additional support required between them. During this transfer from the receiver 11 to the conveying means 4, the containers 2 are briefly engaged, first, with their top end in a pocket 6 of the conveying means 4, and, second, with their bottom end in a portion 12. A simple slide due to gravity can create this transfer, or a mechanical force can be created by an additional pusher.

The receiver 11 moves for example between a horizontal position for receiving the containers 2 and a vertical position for transferring the containers 2 in the conveying means 4, by rotating along a horizontal axis, parallel to the transverse direction 9. The rotation axis can be located at the bottom downstream end of the receiver 11 when it is horizontal for receiving containers 2 and at the bottom of the receiver 11 when it is vertical for transferring the containers 2 in the conveying means 4.

When positioned for receiving the containers 2 from the robotic means 15, the receiver 11 can be seen as a basket with a top surface and a bottom surface. Containers 2 are inserted in and transferred from said receiver 11 though this top surface. The receiver 11 therefore has two working positions. In the first one, the top area is free for inserting containers 2. In the second position, the bottom surface is accessible for example for some pushers to go through it and push the containers 2 in the pockets 6.

According to another possible additional feature, the transfer means 13 is mounted on the receiver 11 and acts at the bottom of each container 2 in the portion 12, said transfer means 13 being a sliding or rotating pusher, or even gravity. While the transfer means 13 is acting on the containers 2 for transferring them in the conveying means 4, the receiver 11 guides the movement of the containers 2 at their periphery. The transfer means 13 can comprise a set of beams, extending from a support structure. This support structure is movable for approaching the bottom surface of the receiver 11, which is approximately vertical during this transfer, or at least parallel to the conveying direction 5 in this area. While this support structure is moved closer to the bottom surface, each such beam enters a portion 12 and acts on the container 2 in it. The whole transfer means 13 acts by contact on the containers 2, and it is rotated with the receiver 11.

In some other embodiments, the transfer means 13 does not follow the rotation of the receiver 11 and is simply brought to the bottom surface of the receiver 11 once it has been rotated for transferring the containers 2 to the conveying means 4.

According to another possible embodiment, the receiver 11 has a plurality of receiver rows 14 next to each other perpendicularly to the transverse direction 9, each receiver rows 14 comprising N receiving portions 12, each portion 12 being dedicated to receive only one container 2. The robotic means 15 therefore loads the receiver 11 with a matrix of containers 2, said matrix having N containers 2 along the transverse direction 9 and a plurality of such a receiver row 14. Once loaded and adapted to the conveying means 4 layout, the containers 2 are then transferred from the receiver 11 to the conveying means 4.

One single group of containers 2 can then be taken by the robotic means 15 from a plurality of crates, loaded in the receiver 11, and then transferred to the conveying means 4. The containers 2 of such a group are therefore treated simultaneously, for first loading the receiver 11 and second transferring the containers 2 to the conveying means 4. This means that the cycle is based on only two steps which can be executed in parallel.

According to another possible additional feature, the robotic means 15 comprises a grasping head acting separately on each container 2 of a batch of containers 2 it loads and in which the containers 2 can be moved relative to each other for changing the pitch inside said batch while they are held by the robotic means 15. As already said, containers 2 are moved to repeat the layout of the conveying means 4, at least in the transverse direction 9. This reorganization can be partly or totally performed while the containers 2 are treated by the robotic means 15. Containers 2 are grasped and held separately one by one, and the batch treated by the robotic means 15 can therefore be reorganized between the crates, from which there are taken, and the receiver 11 in which they are released.

According to another possible additional feature, the portions 12 of the receiver 11 are movable relative to each other at least along the transverse direction 9, for organizing said portions 12 with the tunnel pitch 8. The portions 12 can also be movable perpendicularly for fitting the distance between two successive tunnel rows 7. Before transferring the containers 2 from the receiver 11 to the conveying means 4 in a movement perpendicular to both the transverse direction 9 and the conveying direction 5, the portions 12 of the receiver 11 reproduce the layout of the conveying means 4, in order to transfer simultaneously at least one receiver row 14 in one tunnel row 7.

Hence, reorganizing the containers 2 relative to each other prior to inserting them in the conveying means 4 is achieved in the robotic means 15 and/or in the receiver 11. Inside the robotic means 15 or the receiver 11, containers 2 can be more than spaced differently and the containers 2 arrangement can be completely changed, for example shifting from a matrix arrangement to a line arrangement.

A second object of the present invention is a method for operating the washing unit 1 described above. It is therefore a method for loading containers 2 in pockets 6 of a conveying means 4 which moves containers 2 in a washing tunnel 3 of a washing unit 1, at an infeed zone 10 thereof, said pockets 6 being arranged as parallel tunnel rows 7 of N receiving pockets 6 with a tunnel pitch 8, said tunnel rows 7 extending perpendicular to the conveying direction 5 of the conveying means 4, said method comprising grasping a batch of containers 2 at their top end with a robotic means 15, and transferring containers 2 from a receiver 11, located at the infeed zone 10 and having N portions 12 perpendicularly to the conveying direction 5, to at least one tunnel row 7 of the conveying means 4.

According to the invention, the robotic means 15 releases the containers 2 in the portions 12 of the receiver 11, the containers 2 being moved so as to repeat the layout of the conveying means 4 prior to be transferred to it, at least in terms of a relative movement of containers 2 along the transverse direction 9, perpendicular to the conveying means 4.

The containers 2 are therefore taken in incoming crates by the robotic means 15 and released in a receiver 11. The robotic means 15 releases containers 2 in N separate zones or portions 12, each portion 12 being dedicated and corresponding to a pocket 6.

Therefore, when releasing the containers 2, the robotic means 15 directly acts in the infeed zone 10, and already partly reproduces the pockets 6 layout of the conveying means 4, at least in terms of number N of containers 2 spread along the transverse direction 9, or even in terms of containers 2 position, repeating the tunnel pitch 8.

The containers 2 are move relative to each other from the first configuration given by the crates, to the second configuration, corresponding to the layout of the conveying means 4. This rearrangement is performed either while containers are transferred from the crates to the receiver 11, and/or while they are in the receiver 11. No conveying needs to be organized for splitting a mass flow of containers 2 in a plurality of portions 12.

According to an additional possible feature, the method further comprises pivoting the receiver 11 from a mainly horizontal position, in which containers 2 can be loaded by the robotics means 15 in the portions 12 from above, to a mainly vertical position, from which containers 2 can further be transferred to the pockets 6 of the conveying means 4 by a mainly horizontal force. The receiver 11 is pivoted once it has been filled with containers 2. This means that the rotation is executed after a certain number of loading operations performed by the robotic means 15, each of these loading operations treating a batch of containers 2 which can correspond to a portion of the totality of the capacity of the receiver 11. It goes without saying that holes in crates lead to corresponding holes in the receiver 11.

The receiver 11 is pivoted to arrive against the conveying means 4 and parallel to it, close enough for having a a portion 12 facing a pocket 6, for easily transfering the containers 2. If necessary, a tracking movement can be executed, to have a perfect synchronisation between the position of the receiver 11 and the position of the conveying direction 5 while containers 2 shift from one to the other.

According to another possible additional feature for optimizing the process time, prior to the transfer of the containers 2 it comprises, the receiver 11 is completely filled with containers 2 in one single loading operation of the robotic means 15, said operation thereby loading a batch of containers 2 corresponding to the capacity of the receiver 11, said batch corresponding preferably to the content of a plurality of input crates. The capacity of the receiver 11 corresponds to the total number of containers 2 the receiver 11 can accept and can reproduce the scheme of a plurality of crates along the transverse direction 9. The content of the receiver 11 is transferred to the conveying means 4 once the receiver 11 has been filled with containers 2. As will be further described, this transfer can be executed as one operation or as many operations.

According to another possible additional feature, prior to transferring the containers 2 it comprises, the receiver 11 is completely filled by a plurality of loading operations of the robotic means 15, each operation thereby loading a batch of containers 2 corresponding to a portion of the capacity of the receiver 11. Said batch corresponds, for example, to the content of a crate from which containers 2 are grasped by the robotic means 15, and/or a receiver row 14, and/or a receiver column, perpendicular to said receiver row 14. The receiver 11 layout is therefore filled with containers 2 in a plurality of operations. The robotic means 15 can be lighter, as less containers 2 are handled at each cycle.

In some specific embodiments, with an improved cycle time, prior to being loaded again in another cycle, the whole content of the receiver 11 is transferred to the conveying means 4 in one single transfer operation. This means that a plurality of receiver rows 14 is transferred simultaneously from the receiver 11 to the conveying means 4. In some other embodiments, only a portion of the content of the receiver 11 is transferred during a transfer operation, for example a receiver row 14 or a plurality of receiver rows 14, a plurality of transferring operation being therefore carried out before loading again the receiver 11 in a new cycle.

Hence, the method is of a cyclic nature, based on two main phases: first, loading the receiver 11 with containers 2 taken from crates, and second, transferring containers 2 from the receiver 11 to the conveying means 4. Reorganizing the containers 2 to fit the pockets 6 layout of the conveying means 4 is performed during this cycle.

This sequence can be executed in many different ways for optimizing the global cycle time of this method. For example, more than one receiver 11 can be used: one is brought in front of the vertical portion of the conveying means 4 for transferring its containers 2, while another is being loaded by the robotic means 15. A receiver 11 therefore moves in the infeed zone 10 between a first area which the robotic means 15 can access for releasing containers 2, and a second area, in the vicinity of the conveying means 4, for containers 2 to be transferred to said conveying means 4. Hence, in these embodiments, a plurality of receivers 11 is used, one being loaded by the robotic means 15 while containers 2 of another receiver 11 are being transferred to the conveying means 4. This leads to a further reduced cycle time.

As containers 2 are released in the receiver 11 separated one by one in the transverse direction 9, it might still be needed to adjust their position for a direct transfer in the conveying means 4. This can be done in the robotic means 15 and/or in the receiver 11, increasing or decreasing the distance between containers 2 at least in this transverse direction 9. Hence, according to another possible additional feature, containers 2 are moved relative to each other for pitch adjustment purposes while they are manipulated by the robotic means 15, and/or containers 2 are moved relative to each other for reaching the tunnel pitch 8 while they are in the receiver 11. When containers 2 are moved relative to each other only in the robotic means 4, it goes without saying that this rearrangement leads to reach the tunnel pitch 8.

In the embodiment shown in the attached drawings, the washing unit 1 has a washing tunnel 3 in which an endless conveying means 4 moves the containers 2 to be treated from an infeed zone 10 in an upstream end, to an outfeed zone in an opposed downstream end. This washing unit 1 washes empty containers 2, like bottles, for example. A bottle has a top end, through which liquid is poured and an opposite bottom end, for standing on a support surface.

The tunnel 3 has a series of treatment zones, for example a prewash area, a detergent bath and a rinsing area. The conveying means 4 moves in this tunnel 3 along a longitudinal conveying direction 5, between an infeed zone 10, where containers 2 are introduced in the conveying means 4, and an outfeed zone where containers are taken out. The infeed zone 10 and the outfeed zone are preferably located at opposed ends of the tunnel 3. The conveying means 4 is charged with containers 2 from the infeed zone 10 to the outfeed zone, and goes back to the infeed zone 10 for a new cycle after having delivered containers 2 at the outfeed zone.

The layout of the conveying means 4 is based on pockets 6 arranged in transversal tunnel rows 7, parallel to each other, and perpendicular to the conveying direction 5. The conveying means 4 is built as successive tunnel rows 7, and each tunnel rows 7 comprises N pockets 6 in which containers 2 are received and conveyed in the tunnel 3. It is to be understood that a tunnel row 7 could comprise additional pockets 6, but which are not used for receiving containers 2 and are therefore closed or not active. The tunnel row 7 comprises at least N pockets 6 in a working condition. From a general standpoint, the number of portions 12 in a receiver row 14 normally equals the number of pockets 6 in tunnel row 7, in order for the receiver 11 to be able to fill the tunnel row 7 even in cases where each of its pocket 6 is used.

Each row 7 extends in a transverse direction 9, which is perpendicular to the conveying direction 5. The tunnel rows 7 are next to each other in the conveying direction 5. This means that the movement of the conveying means 4 constantly brings new tunnel rows 7 in the infeed zone 10, for them to be loaded, and constantly brings new tunnel rows 7 in the outfeed zone, for them to be discharged.

The number of pockets 6 in a tunnel row 7 defines the capability of the washing unit 1, as this number corresponds to the number of containers 2 which can receive the same treatment simultaneously. The containers 2 are normally conveyed upside down in the conveying means 4.

Also, the pockets 6 have a certain size, normally compatible with the range of containers 2 to be treated. They are normally equally spaced in the tunnel row 7, with a certain pitch: the distance between the center of a pocket 6 and the center of the next pocket 6 is defined as the tunnel pitch 8. This means that the axes of symmetry of two containers 2 next to each other in the same tunnel row 7 are separated by the tunnel pitch 8. The tunnel pitch 8 multiplied by the number of pockets 6 N normally corresponds to the width of the conveying means 4. The layout of the conveying means 4 is defined as the geometric positioning of its building pockets 6.

When containers 2 are inserted in the conveying means 4, they are spaced with the tunnel pitch 8. The containers 2 in the receiver 11 reproduce the pockets 6 layout of the conveying means 4.

The washing unit 1 also comprises a robotic means 15. This robotic means 15 is here to grasp containers 2 in the box or crate in which they stand initially. Crates or boxes with containers 2 to be washed are normally received on an infeed conveyor 16. Containers 2 are then grasped at their top end by a tool mounted at the end of the robotic means 15. Said robotic means 15 can be based on articulated arms or slides and beams. Crates are moved by the infeed conveyor 16 to reach the working zone of the robotic means 15. In preferred embodiment, the infeed conveyor moves parallel to the transverse direction 9.

It should be noted here that, in the crate or box, containers 2 are organized as a matrix. This matrix is made with a certain number X of containers 2 in a first direction and a certain number Y of containers 2 in a second direction, perpendicular to the first one. Containers 2 shift from crates bucket to receiver 11 bucket or portions 12 with the robotic means 15, and from said receiver 11 bucket to conveying means 4 bucket or pockets 6.

The robotic means 15 treats simultaneously a batch of containers 2 taking them out of the crate and loading them in an intermediary receiver 11. The robotic means 15 normally transfers simultaneously each container 2 comprised in the crate. It is also possible that the robotic means 15 treats simultaneously the content of more than one crate. Therefore, the batch of containers 2 treated by the robotic means 15 to move them from the crates to the receiver 11 preferably consists in the content of at least one crate.

In order to have a time efficient process, the robotic means 15 preferably only moves the containers 2 along the conveying direction 5 and not along the transverse direction. This means that the end of the infeed conveyor 16, from which containers 2 are grasped, the receiver 11 and the conveying means 4 are next to each other in the conveying direction 5.

Preferably, the batch of containers 2 is released on the receiver 11 so that the transverse direction 9 is finally parallel to either said first direction of the matrix of containers 2 in the crates, or to the second direction.

The robotic means 15 is used to create the layout needed for the containers 2 to be inserted in the conveying means 4. The robotic means 15 will load the receiver 11 with containers 2 in a layout comprising, in the transverse direction, as many containers 2 as the N pockets 6 in a tunnel row 7.

The receiver 11 is located at the level of the infeed zone 10. The robotic means 15 therefore delivers the containers 2 directly at the infeed zone 10, in a receiver 11. From a general standpoint, the working area of the robotic means 15 arrives at the infeed zone 10, and there is no conveyor moving the containers 2 from the working area of the robotic means 15 to the infeed zone 10 of the tunnel 3, or at least to the working zone of the transfer means 13. The receiver 11 is loaded with containers 2 from at least one crate and then unloaded in the conveying means 4 in a repeated cycle. This cycle comprises loading in and further unloading from the receiver 11 at least one receiver row 14 of N containers 2.

The receiver 11 extends at least along the transverse direction 9 and has, along said direction, N portions 12 aiming at separating the containers 2 in the transverse direction 9. The N portions 12 are next to each other in the transverse direction 9. The size of the portions 12 in the transverse direction 9 normally corresponds to only one container 2. In some configurations, a portion 12 is defined by two parallel walls, separated by a certain distance compatible for receiving only one container 2 or a one container 2 wide column. This distance is small enough to make sure that only a column of a one container 2 width can be received in the portion 12. In cases in which portions 12 are sized to receive more than one container 2 in the transverse direction 9, the robotic means 15 still releases containers 2 in the receiver 11 so that each portion 12 only has one container 2 in the transverse direction 9.

In the receiver 11, containers 2 are separated from each other in the transverse direction 9. The walls defining the portions 12 are separated along the transverse direction 9, with a distance which might approximately correspond to the diameter of the circular basis of a container 2. From a general standpoint, the walls are separated to repeat the tunnel pitch 8, permanently or after some relative movement. The position along said transverse direction 9 is therefore controlled for each container 2 separately thanks to these portions 12.

The size of the receiver 11 in a direction perpendicular to the transverse direction 9 can be such that one or more container 2 can be received in each portion 12. From a general standpoint, the walls defining the portions 12 can extend perpendicular to the transverse direction 9 with a length corresponding to the base diameter of a container 2, or more. That means that the receiver 11 can have one or more receiver row 14, parallel to the transverse direction 9. From a general standpoint, a receiver row 14 receives from the robotic means 15 N containers 2 in the transverse direction 9.

In some other embodiments, each portion 12 is sized for one container 2 only. A portion 12 is therefore able not only to restrict the movement of each single container 2 in the transverse direction 9, but also restrict this movement perpendicular to said transverse direction 9.

This means that the robotic means 15 releases each container 2 in a separate portion 12, and that the position of each container 2 is controlled in both the transverse direction 9 and perpendicularly, by one single portion 12. Again, the receiver 11 can be sized for having more than one receiver row 14. In this case, the receiver 11 has a set of rows of portions 12, each of these receiver rows 14 extending along the transverse direction 9 and comprising N portions 12.

The receiver 11 thereby has a configuration with a set of portions 12, organized as a matrix layout, and is filled by the robotic means 15 with batches extracted from crates. The first direction of this matrix layout is parallel to the conveying direction 5, and the second direction is parallel to the transverse direction 9. As already said, in the transverse direction 9, the receiver 11 has N portions 12, so that the receiver 11 has a configuration repeating the configuration of the conveying means 4. Once filled with containers 2 in at least one complete receiver row 14, the receiver 11 is emptied in the conveying means 4. This transfer takes place simultaneously for each container 2 of at least one receiver row 14, or even of many receiver rows 14 simultaneously.

Also, it goes without saying that the robotic means 15 is precise enough to release each container 2 in this matrix based configuration for the portions 12 of the receiver 11.

As already said, the receiver row 14 and the tunnel row 7 can receive the same number N of containers 2: the number of portions 12 in a receiver row 14 corresponds to the number of pockets 6 in a tunnel row 7. The receiver 11 can have one or more receiver row 14, and each portion 12 can correspond to only one such row or to a plurality.

In preferred embodiments, the number of receiver rows 14 corresponds to the number of containers 2 along a side of the matrix in the crate. In any case, the receiver 11 is filed by the robotic means 15: the overall layout of the receiver 11, in terms of number of portions 12 in a receiver row 14 and number of receiver rows 14, can be obtained by combining containers 2 batches in many different ways, depending on the configuration of the batch itself, said batch being for example the containers 2 as organized in one crate.

In preferred configurations, the number N of portions 12 of the receiver 11 in the transverse direction 9 is a multiple of the number of containers 2 in the same direction in one crate. In the perpendicular direction, corresponding to the conveying direction 5, the number of containers 2 in the receiver 11 can be a multiple of the number of containers 2 in this direction. This leads to a receiver 11 corresponding to an addition of a certain number of crates as one column along the transverse direction 9. In some embodiments, the robotic means 15 transfers in one step the content of this number of crates in the receiver 11. The receiver 11 is then entirely loaded in one single cycle of the robotic means 15, and can later be entirely unloaded in the conveying means 4 within one single transfer operation. A group of containers 2, corresponding to a matrix of N containers in the transverse direction 9, and, perpendicularly, of the number of containers in the crates in the conveying direction 5, passes from the crates to the receiver 11, and then from the receiver 11 to the conveying means 4.

The receiver 11 can correspond to one column of crates in the transverse direction 9 or to more than one such a column. It can even correspond to the addition, along the transverse direction 9, of crates rotated along the vertical axis of 90 degrees.

It should be noted here that the receiver 11 has a bottom, on which containers 2 stand, and also has lateral boundaries for each container 2. These lateral boundaries limit the movement of each single container 2 along the transverse direction 9. Preferably, the top of the receiver 11 is open, so that containers 2 can be inserted in the receiver 11 from above, and later taken out again through this area. Also, the receiver 11 works as a receiving horizontal surface and the containers 2 stand therein in a vertical position after having been released by the robotic means 15. The receiver 11 then works as a basket for the containers 2, especially when the portions 12 are sized for one container 2 each.

When the receiver 11 has at least one receiver row 14 full of containers 2, they are then transferred in the conveying means 4 for being processed in the washing tunnel 3. It should be noted here that if the crate from which containers 2 are taken is initially not completely filled with containers 2, the receiver 11 will normally have a corresponding filling layout with portions 12 empty or partly filled. The containers 2 in the receiver 11 are then transferred in the conveying means 4 thanks to a transfer means 13, preferably acting at the bottom of the container 2. This transfer means 13 can go through the bottom of the receiver 11 and move the containers 2 to the pockets 6. The bottom of the receiver 11 therefore has passages or apertures through which the transfer means 13 can act and touch the bottom of the containers 2.

Containers 2 stand vertical in the receiver 11 and must be inserted approximately horizontal in the conveying means 4 at the infeed zone 10. Also, containers 3 have to be inserted in the tunnel 3 pockets 6 with head first. This means that when transferring the containers 3 to the conveying means 4, they must be rotated from a vertical position to a horizontal position.

Also, at least all the containers 2 of a receiver row 14 are transferred simultaneously from the receiver 11 to the conveying means 4. If the cycle time requires it, it is also possible to transfer simultaneously more than one receiver row 14.

Some embodiments use a rotary transfer means 13. Such a rotary transfer means 13 rotates along the transverse direction 9 and both lifts the containers 2 and pushes them in the pockets 6. Such a rotary transfer means is for example disclosed in US5038917. The support which comes to the bottom of the container 2 is out of the axis of rotation, and the containers 2 are therefore both lifted and rotated. This transfer means 13 is compatible with a receiver 11 having a fixed bottom surface, as well as with a receiver 11 having a moving bottom surface, for example a receiver 11 in the form of a set of vertical walls defining the portions 12, above endless belt based advancing means for bringing the containers 2 above the support.

In some other embodiments, the receiver 11 is a rotating frame, in which each container 2 is positioned separately. Such a receiver 11 can rotate around the transverse direction 9 and finally reach an upper position in which the containers 2 are approximately horizontal, in front of the conveying means 4. When arrived in such a position, a pusher or transfer means 13 comes and acts against the bottom of the containers 2, through the bottom of the receiver 11. At this stage, the containers 3 are lying horizontal in the portions 12 and touch the receiver 11 with their side surface. The side walls of the receiver 11 work now as a support for the horizontal containers 3 during this operation.

It is clear that prior to such a transfer operation, the containers 2 must be correctly spaced along the transverse direction 9, within the receiver 11, repeating the tunnel pockets 6 layout, at least the tunnel pitch 8, so that each container 2 arrives in front of a pocket 6. Adjusting the position of the containers 2 from their configuration in the crates to the configuration and layout according to the tunnel pitch 8 can be performed while the containers 3 are moved by the robotic means 15, and/or while they are in the receiver 11.

For the sake of reducing the footprint of the washing unit 1, adjusting the pitch of the containers 2 in the receiver 11 is achieved only by moving them along the transverse direction 9. This avoids the use of horizontal band based advancing means, pushing the containers along the conveying direction 5 in lanes defined by vertical walls and reproducing the tunnel pitch 8. Adjusting the pitch only by moving the containers 2 in the transverse direction 9 also reduces the risk of jam.

The robotic means 15 delivers the containers 2 in the infeed zone 10 and builds the transverse configuration required by the conveying means 4, thereby avoiding a long advancing means for adjusting the position of the containers 2 in the transverse direction 9.

As already explained, the receiver 11 is a mirror of the layout of the pockets 6 in the conveying means 4. On the other side, containers 2 are directly loaded in the receiver 11 from the crates. The difference between, on the one side, the number N of containers 2 in the tunnel row 7, and, on the other side, the number of containers 2 in a crate, is managed by aggregating in the receiver 11 the content of more than one crate. However, the pitch along the transverse direction 9 is different between, on the one side, the configuration within the crates, and, on the other side, the configuration within the conveying means 4. Therefore, in a large majority of situations, the containers 2 have to be moved relative to each other along the transverse direction 9 prior to transfer them in the conveying means 4.

Rearranging the containers 2 relative position along the transverse direction 9 is achieved after grasping them from the crate and before inserting them in the conveying means 4. In some embodiments, the batch of containers 2 grasped by the robotic means 15, which can be the content of one or more crates, is reorganized while being moved from the crate or crates to the receiver 11. This means that the tunnel pitch 8 is reached thanks to the robotic means 15 itself. Hence, containers 2 are not moved anymore in the receiver 11 along the transverse direction 9.

Changing the container 2 pitch can also be done by the receiver 11 itself. It should be noted here that the receiver 11 controls separately the position of each container 2 in the transverse direction 9. The receiver 11 has lateral walls, movable in the transverse direction 9, and thereby moving the containers 2 in this direction, by pushing and or pulling.

Of course, adjusting the container 2 pitch to reach the tunnel pitch 8 can be done first by moving the containers 2 in the robotic means 15, and then by further moving them in the receiver 11. In these kinds of embodiments, both the robotic means 15 and the receiver 11 can move the containers 2 in the transverse direction 9.

Accordingly, the particular arrangements disclosed are meant to be illustrative only, and not limiting as to the scope of the invention which is to be given the full breadth of the claims appended in any and all equivalents thereof, including any combination of their features.

## Claims

1. Washing unit (1) for washing empty containers (2), comprising a washing tunnel (3) and an endless conveying means (4) for moving said containers (2) in said tunnel (3) along a conveying direction (5), said conveying means (4) having a set of receiving pockets (6), arranged as a plurality of tunnel rows (7) of N receiving pockets (6) with a tunnel pitch (8), each row (7) extending along a transverse direction (9) perpendicular to the conveying direction (5), the containers (2) being received in the pockets (6) at the level of an infeed zone (10) of the tunnel (3), washing unit (1) **characterized in that**
it comprises
- a receiver (11), located at the infeed zone (10), having at least one receiver row (14), parallel to the transverse direction (9), of N separated portions (12) for receiving containers (2) and organizing them with the tunnel pitch (8),
- a robotic means (15), for loading the N portions (12) of the receiver (11) with containers (2), said robotic means (15) grasping containers (2) in the box or crate in which they stand initially, and treating simultaneously a batch of said containers (2), taking them out and loading them in the receiver (11) and
- a transfer means (13), for acting on the containers (2) to transfer them from said portions (12) to the conveying means (4).

2. Washing unit (1) according to claim 1, **characterized in that**
the receiver (11) can be pivoted along an axis parallel to the transverse direction (9) from a mainly horizontal position, in which it can receive containers (2) from the robotic means (4), which grasped them at their top end, to a mainly vertical position, in which it can deliver the containers (2) to the conveying means (4).

3. Washing unit (1) according to claim 1 or 2, **characterized in that**
the transfer means (13) is mounted on the receiver (11) and acts at the bottom of each container (2) in the portion (12).

4. Washing unit (1) according to any of claims 1 to 3, **characterized in that**
the receiver (11) has a plurality of receiver rows (14) next to each other perpendicularly to the transverse direction (9), each receiver rows (14) comprising N receiving portions (12), each portion (12) being dedicated to receive only one container (2).

5. Washing unit (1) according to any of claims 1 to 4, wherein
the robotic means (15) comprises a grasping head acting separately on each container (2) of a batch of containers (2) it loads and in which the containers (2) can be moved relative to each other for changing the pitch inside said batch while they are held by the robotic means (15).

6. Washing unit (1) according to any of claims 1 to 5, wherein
the portions (12) of the receiver (11) are movable relative to each other at least along the transverse direction (9), for organizing said portions (12) with the tunnel pitch (8).

7. Method for loading containers (2) in pockets (6) of a conveying means (4) which moves containers (2) in a washing tunnel (3) of a washing unit (1), at an infeed zone (10) thereof, said pockets (6) being arranged as parallel tunnel rows (7) of N receiving pockets (6) with a tunnel pitch (8), said tunnel rows (7) extending perpendicular to the conveying direction (5) of the conveying means (4), said method comprising transferring containers (2) from a receiver (11), located at the infeed zone (10) and having N portions (12) perpendicularly to the conveying direction (5), to at least one tunnel row (7) of the conveying means (4),
**characterized in that**
the method comprises grasping, with a robotic means (15), at their top end, a batch of containers (2) in the box or crate in which they stand initially, the robotic means (15) releasing the containers (2) in the portions (12) of the receiver (11), and the containers (2) being moved so as to repeat the layout of the conveying means (4) prior to be transferred to it.

8. Method according to claim 7, further comprising
pivoting the receiver (11) from a mainly horizontal position, in which containers (2) can be loaded by the robotics means (15) in the portions (12) from above, to a mainly vertical position, from which containers (2) can further be transferred to the pockets (6) of the conveying means (4) by a mainly horizontal force.

9. Method according to any of claims 7 or 8, wherein
prior to the transfer of the containers (2) it comprises, the receiver (11) is completely filled with containers (2) in one single loading operation of the robotic means (15), said operation thereby loading a batch of containers (2) corresponding to the capacity of the receiver (11).

10. Method according to any of claims 7 or 8, wherein
prior to transferring the containers (2) it comprises, the receiver (11) is completely filled by a plurality of loading operations of the robotic means (15), each operation thereby loading a batch of containers (2) corresponding to a portion of the capacity of the receiver (11).

11. Method according to any of claims 7 to 10, wherein
prior to being loaded again in another cycle, the whole content of the receiver (11) is transferred to the conveying means (4) in one single transfer operation.

12. Method according to any of claims 7 to 10, wherein
only a portion of the content of the receiver (11) is transferred during a transfer operation.

13. Method according to any of claims 7 to 12, wherein
containers (2) are moved relative to each other for pitch adjustment purposes while they are manipulated by the robotic means (15).

14. Method according to any of claims 7 to 13, wherein
containers (2) are moved relative to each other for reaching the tunnel pitch (8) while they are in the receiver (11).

15. Method according to any of claims 7 to 14, wherein
a plurality of receivers (11) is used, one being loaded by the robotic means (15) while containers (2) of another receiver (11) are being transferred to the conveying means (4).

## Patentansprüche

1. Spüleinheit (1) zum Spülen leerer Behälter (2), umfassend einen Spültunnel (3) und ein Endlosfördermittel (4) zum Bewegen der Behälter (2) in dem Tunnel (3) entlang einer Förderrichtung (5), wobei das Fördermittel (4) einen Satz von Aufnahmevertiefungen (6) aufweist, die als mehrere Tunnelreihen (7) von N Aufnahmevertiefungen (6) mit einem Tunnelabstand (8) angeordnet sind, wobei sich jede Reihe (7) entlang einer Querrichtung (9) erstreckt, die senkrecht zu der Förderrichtung (5) ist, wobei die Behälter (2) in den Vertiefungen (6) auf der Höhe einer Einlaufzone (10) des Tunnels (3) aufgenommen werden, wobei die Wascheinheit (1) **dadurch gekennzeichnet ist, dass** sie umfasst:
- eine Aufnahmevorrichtung (11), die sich in der Einlaufzone (10) befindet, die mindestens eine Aufnahmevorrichtungsreihe (14) parallel zu der Querrichtung (9) von N getrennten Abschnitten (12) zum Aufnehmen von Behältern (2) und Organisieren davon mit dem Tunnelabstand (8) aufweist,
- ein robotisches Mittel (15) zum Beladen der N Abschnitte (12) der Aufnahmevorrichtung (11) mit Behältern (2), wobei das robotische Mittel (15) Behälter (2) in dem Kasten oder der Kiste, in der sie anfänglich stehen, greift und gleichzeitig eine Charge der Behälter (2) behandelt, sie herausnimmt und sie in die Aufnahmevorrichtung (11) lädt und
- ein Übergabemittel (13) zum Einwirken auf die Behälter (2), um sie von den Abschnitten (12) an das Fördermittel (4) zu übergeben.

2. Spüleinheit (1) nach Anspruch 1, **dadurch gekennzeichnet, dass**
die Aufnahmevorrichtung (11) entlang einer Achse parallel zu der Querrichtung (9) von einer hauptsächlich horizontalen Stellung, in der sie Behälter (2) von dem robotischen Mittel (4) aufnehmen kann, das sie an ihrem oberen Ende ergriff, zu einer hauptsächlich vertikalen Stellung, in der sie die Behälter (2) zu dem Fördermittel (4) abgeben kann, gedreht werden kann.

3. Spüleinheit (1) nach Anspruch 1 oder 2, **dadurch gekennzeichnet, dass**
das Übergabemittel (13) an der Aufnahmevorrichtung (11) angebracht ist und auf den Boden jedes Behälters (2) in dem Abschnitt (12) einwirkt.

4. Spüleinheit (1) nach einem der Ansprüche 1 bis 3, **dadurch gekennzeichnet, dass**
die Aufnahmevorrichtung (11) mehrere Aufnahmevorrichtungsreihen (14) nebeneinander senkrecht zu der Querrichtung (9) aufweist, wobei alle Aufnahmevorrichtungsreihen (14) N Aufnahmeabschnitte (12) umfassen, wobei jeder Abschnitt (12) dazu bestimmt ist, nur einen Behälter (2) aufzunehmen.

5. Spüleinheit (1) nach einem der Ansprüche 1 bis 4, wobei
das robotische Mittel (15) einen Greifkopf umfasst, der getrennt auf jeden Behälter (2) einer Charge von Behältern (2), die es belädt, einwirkt, und wobei die Behälter (2) relativ zueinander bewegt werden können, um den Abstand innerhalb der Charge zu ändern, während sie durch das robotische Mittel (15) gehalten werden.

6. Spüleinheit (1) nach einem der Ansprüche 1 bis 5, wobei
die Abschnitte (12) der Aufnahmevorrichtung (11) relativ zueinander zumindest entlang der Querrichtung (9) beweglich sind, um die Abschnitte (12) mit dem Tunnelabstand (8) zu organisieren.

7. Verfahren zum Laden von Behältern (2) in Vertiefungen (6) eines Fördermittels (4), das Behälter (2) in einem Spültunnel (3) einer Spüleinheit (1) bewegt, an einer Einlaufzone (10) davon, wobei die Vertiefungen (6) als parallele Tunnelreihen (7) von N Aufnahmevertiefungen (6) mit einem Tunnelabstand (8) angeordnet sind, wobei sich die Tunnelreihen (7) senkrecht zu der Förderrichtung (5) des Fördermittels (4) erstrecken, wobei das Verfahren Übergeben von Behältern (2) von einer Aufnahmevorrichtung (11), die sich an der Einlaufzone (10) befindet und N Abschnitte (12) senkrecht zu der Förderrichtung (5) aufweist, an mindestens eine Tunnelreihe (7) des Fördermittels (4), umfasst,
**dadurch gekennzeichnet, dass**
das Verfahren Greifen, mit einem robotischen Mittel (15), an ihrem oberen Ende, einer Charge von Behältern (2) in dem Kasten oder der Kiste, in der sie anfänglich stehen, umfasst, wobei die robotischen Mittel (15) die Behälter (2) in die Abschnitte (12) der Aufnahmevorrichtung (11) abgeben, und die Behälter (2) so bewegt werden, dass sie die Anordnung des Fördermittels (4) wiederholen, bevor sie an dieses übergeben werden.

8. Verfahren nach Anspruch 7, ferner umfassend Drehen der Aufnahmevorrichtung (11) von einer hauptsächlich horizontalen Stellung, in der Behälter (2) durch das robotische Mittel (15) von oben in die Abschnitte (12) geladen werden können, zu einer hauptsächlich vertikalen Stellung, aus der Behälter (2) weiter zu den Vertiefungen (6) des Fördermittels (4) durch eine hauptsächlich horizontale Kraft übergeben werden können.

9. Verfahren nach einem der Ansprüche 7 oder 8, wobei vor der Übergabe der Behälter (2), es umfasst, dass die Aufnahmevorrichtung (11) vollständig mit Behältern (2) in einem einzelnen Ladevorgang des robotischen Mittels (15) gefüllt wird, wobei durch den Vorgang eine Charge von Behältern (2) geladen wird, die dem Fassungsvermögen der Aufnahmevorrichtung (11) entspricht.

10. Verfahren nach einem der Ansprüche 7 oder 8, wobei vor dem Übergeben der Behälter (2), es umfasst, dass die Aufnahmevorrichtung (11) vollständig durch mehrere Ladevorgänge des robotischen Mittels (15) gefüllt wird, wobei durch jeden Vorgang eine Charge von Behältern (2) geladen wird, die einem Teil des Fassungsvermögens der Aufnahmevorrichtung (11) entspricht.

11. Verfahren nach einem der Ansprüche 7 bis 10, wobei bevor sie in einem anderen Zyklus erneut beladen wird, der gesamte Inhalt der Aufnahmevorrichtung (11) an das Fördermittel (4) in einem einzelnen Übergabevorgang übergeben wird.

12. Verfahren nach einem der Ansprüche 7 bis 10, wobei nur ein Teil des Inhalts der Aufnahmevorrichtung (11) während eines Übergabevorgangs übergeben wird.

13. Verfahren nach einem der Ansprüche 7 bis 12, wobei Behälter (2) relativ zueinander zu Abstandseinstellungszwecken bewegt werden, während sie durch das robotische Mittel (15) manipuliert werden.

14. Verfahren nach einem der Ansprüche 7 bis 13, wobei Behälter (2) relativ zueinander bewegt werden, um den Tunnelabstand (8) zu erreichen, während sie sich in der Aufnahmevorrichtung (11) befinden.

15. Verfahren nach einem der Ansprüche 7 bis 14, wobei mehrere Aufnahmevorrichtungen (11) verwendet werden, wobei eine durch das robotische Mittel (15) beladen wird, während Behälter (2) einer anderen Aufnahmevorrichtung (11) an das Fördermittel (4) übergeben werden.

## Revendications

1. Unité de lavage (1) pour le lavage de récipients vides (2), comprenant un tunnel de lavage (3) et un moyen de transport sans fin (4) pour le déplacement desdits récipients (2) dans ledit tunnel (3) le long d'un sens de transport (5), ledit moyen de transport (4) ayant un ensemble de poches de réception (6), agencées pour former une pluralité de lignes de tunnel (7) de N poches de réception (6) avec un écartement de tunnel (8), chaque ligne (7) s'étendant le long d'un sens transversal (9) perpendiculaire au sens de transport (5), les récipients (2) étant reçus dans les poches (6) au niveau d'une zone d'alimentation (10) du tunnel (3), l'unité de lavage (1) **caractérisée en ce qu'**elle comprend
- un récepteur (11), situé au niveau de la zone d'alimentation (10), ayant au moins une ligne de récepteur (14), parallèle au sens transversal (9), de N parties séparées (12) pour recevoir des récipients (2) et les organiser avec l'écartement de tunnel (8),
- un moyen robotique (15), pour charger sur les N parties (12) du récepteur (11) des récipients (2), ledit moyen robotique (15) agrippant des récipients (2) dans la boîte ou la caisse dans laquelle ils sont initialement posés, et traiter simultanément un lot desdits récipients (2), en les sortant et en les chargeant dans le récepteur (11) et
- un moyen de transfert (13), pour agir sur les récipients (2) pour les transférer desdites parties (12) au moyen de transport (4).

2. Unité de lavage (1) selon la revendication 1, **caractérisée en ce que** le récepteur (11) peut être pivoté le long d'un axe parallèle au sens transversal (9) à partir d'une position principalement horizontale, dans laquelle il peut recevoir des récipients (2) provenant du moyen robotique (4), qui les a agrippés au niveau de leur extrémité supérieure, vers une position principalement verticale, dans laquelle il peut déposer les récipients (2) sur le moyen de transport (4).

3. Unité de lavage (1) selon la revendication 1 ou 2, **caractérisée en ce que** le moyen de transfert (13) est monté sur le récepteur (11) et agit au niveau du fond de chaque récipient (2) dans la partie (12).

4. Unité de lavage (1) selon l'une quelconque des revendications 1 à 3, **caractérisée en ce que** le récepteur (11) a une pluralité de lignes de récepteur (14) les unes à côté des autres perpendiculaires au sens transversal (9), chaque ligne de récepteur (14) comprenant N parties de réception (12), chaque partie (12) étant dédiée à la réception d'un seul récipient (2).

5. Unité de lavage (1) selon l'une quelconque des revendications 1 à 4, dans laquelle le moyen robotique (15) comprend une tête de préhension agissant séparément sur chaque récipient (2) d'un lot de récipients (2) qu'il charge et dans laquelle les récipients (2) peuvent être déplacés les uns par rapport aux autres pour changer l'écartement à l'intérieur dudit lot lorsqu'ils sont portés par le moyen robotique (15).

6. Unité de lavage (1) selon l'une quelconque des revendications 1 à 5, dans laquelle les parties (12) du récepteur (11) sont mobiles les unes par rapport aux autres au moins le long du sens transversal (9), pour organiser lesdites parties (12) avec l'écartement de tunnel (8).

7. Procédé pour charger des récipients (2) dans des poches (6) d'un moyen de transport (4) qui déplace des récipients (2) dans un tunnel de lavage (3) d'une unité de lavage (1), au niveau d'une zone d'alimentation (10) de celle-ci, lesdites poches (6) étant agencées pour former des lignes de tunnel parallèles (7) de N poches de réception (6) avec un écartement de tunnel (8), lesdites lignes de tunnel (7) s'étendant perpendiculairement au sens de transport (5) du moyen de transport (4), ledit procédé comprenant le transfert de récipients (2) d'un récepteur (11), situé au niveau de la zone d'alimentation (10) et ayant N parties (12) perpendiculaires au sens de transport (5), vers au moins une ligne de tunnel (7) du moyen de transport (4), **caractérisé en ce que** le procédé comprend la préhension, avec un moyen robotique (15), au niveau de leur extrémité supérieure, d'un lot de récipients (2) dans la boîte ou la caisse dans laquelle ils sont initialement posés, le moyen robotique (15) relâchant les récipients (2) dans les parties (12) du récepteur (11), et les récipients (2) étant déplacés de manière à répéter l'agencement du moyen de transport (4) avant d'y être transférés.

8. Procédé selon la revendication 7, comprenant en outre le pivotement du récepteur (11) à partir d'une position principalement horizontale, dans laquelle des récipients (2) peuvent être chargés par le moyen robotique (15) dans les parties (12) par le haut, vers une position principalement verticale, à partir de laquelle des récipients (2) peuvent ensuite être transférés vers les poches (6) du moyen de transport (4) par une force principalement horizontale.

9. Procédé selon l'une quelconque des revendications 7 ou 8, dans lequel avant le transfert des récipients (2) qu'il comprend, le récepteur (11) est entièrement rempli avec des récipients (2) en une seule opération de chargement du moyen robotique (15), ladite opération chargeant ainsi un lot de récipients (2) correspondant à la capacité du récepteur (11).

10. Procédé selon l'une quelconque des revendications 7 ou 8, dans lequel avant le transfert des récipients (2) qu'il comprend, le récepteur (11) est entièrement rempli par une pluralité d'opérations de chargement du moyen robotique (15), chaque opération chargeant ainsi un lot de récipients (2) correspondant à une partie de la capacité du récepteur (11).

11. Procédé selon l'une quelconque des revendications 7 à 10, dans lequel avant d'être chargé à nouveau lors d'un autre cycle, l'ensemble du contenu du récepteur (11) est transféré vers le moyen de transport (4) en une seule opération de transfert.

12. Procédé selon l'une quelconque des revendications 7 à 10, dans lequel seule une partie du contenu du récepteur (11) est transférée lors d'une opération de transfert.

13. Procédé selon l'une quelconque des revendications 7 à 12, dans lequel des récipients (2) sont déplacés les uns par rapport aux autres à des fins d'ajustement de l'écartement pendant qu'ils sont manipulés par le moyen robotique (15).

14. Procédé selon l'une quelconque des revendications 7 à 13, dans lequel des récipients (2) sont déplacés les uns par rapport aux autres pour atteindre l'écartement de tunnel (8) pendant qu'ils sont dans le récepteur (11).

15. Procédé selon l'une quelconque des revendications 7 à 14, dans lequel une pluralité de récepteurs (11) est utilisée, l'une étant chargée par le moyen robotique (15) pendant que des récipients (2) d'un autre récepteur (11) sont transférés vers le moyen de transport (4).
